# EUROPÄISCHE PATENTSCHRIFT

(11) **EP 1 977 502 B1**
(45) Veröffentlichungstag und Bekanntmachung des Hinweises auf die Patenterteilung: **29.08.2018**
(21) Anmeldenummer: 07703718.2
(22) Anmeldetag: 09.01.2007
(51) Int. Cl.: H02P 15/00, G01R 31/00, H02J 7/14

(54) **VERFAHREN UND ELEKTRONISCHER REGLER MIT STROMMESSSCHALTUNG ZUR STROMMESSUNG MITTELS SENSE-FET UND SIGMA-DELTA-MODULATION**
METHOD AND ELECTRONIC REGULATOR WITH A CURRENT MEASURING CIRCUIT FOR MEASURING THE CURRENT BY SENSE-FET AND SIGMA-DELTA MODULATION
PROCEDE ET REGULATEUR ELECTRONIQUE COMPRENANT UN CIRCUIT DE MESURE DE COURANT CONCU POUR MESURER LE COURANT AU MOYEN D'UN TRANSISTOR A EFFET DE CHAMP DE DETECTION ET D'UNE MODULATION SIGMA-DELTA

(30) Priorität: 10.01.2006 DE 102006001434; 03.01.2007 DE 102007001458
(43) Veröffentlichungstag der Anmeldung: 08.10.2008
(73) Patentinhaber: Continental Teves AG & Co. oHG, 60488 Frankfurt am Main (DE)
(72) Erfinder: OEHLER, Peter, 60314 Frankfurt am Main (DE); SCHMITZ, Axel, 65795 Hattersheim (DE); HEINZ, Micha, 64293 Darmstadt (DE); MICHEL, Frank, 61191 Rosbach v. d. Höhe (DE)
(86) Internationale Anmeldenummer: PCT/EP2007/050167
(87) Internationale Veröffentlichungsnummer: WO 2007/080163

(56) Entgegenhaltungen:
- WO-A-02/058967
- WO-A-03/036787
- WO-A-03/039904
- DE-C1- 4 401 064

## Beschreibung

Die Erfindung betrifft einen elektronischen Regler gemäß Oberbegriff von Anspruch 1, ein Verfahren gemäß Oberbegriff von Anspruch 15 sowie die Verwendung des elektronischen Reglers in einem Kraftfahrzeugbremssystem.

In hochwertigen elektronischen ABS- und ESP-Bremsenregelsystemen werden die Ventilspulen zumindest zum Teil nicht mehr geschaltet, sondern es erfolgt eine analogisierte Ansteuerung mittels einer pulsweitenmodulierten Stromregelung (PWM), welche eine nahezu analoge Ansteuerung der Hydraulikventile zulässt. Hierzu sind mehrere Ventilansteuerungsschaltungen vorgesehen, die beispielsweise mittels gegenphasig geschalteter MOS-Transistoren aufgebaut sein können. Um eine kostengünstige und Platz sparende Lösung zu ermöglichen, wird eine solche Ventilansteuerungsschaltung üblicherweise als eine integrierte Schaltung realisiert, zumal für ein komplexes ESP-System neben zahlreicher zusätzlicher Schaltungsteile bis zu acht solcher Ventilansteuerungsschaltungen vorhanden sein müssen. Ein reiner Analogverstärker zur Ansteuerung einer Ventilspule ist aus Gründen zu hoher Verlustleistung nicht praktikabel.

Die Vorgehensweise bei der Messung des Iststroms mittels eines einzigen A/D-Wandlers innerhalb einer PWM-Regelung zur Ansteuerung der oben erwähnten Ventilspulen geht aus der WO02/058967 A2 (P 10057) und der WO03/039904 A2 (P 10253) bereits hervor. Gemäß den darin beschriebenen Schaltungsbeispielen wird eine bestimmte Anzahl von Strommesskanälen entsprechend einer komplexen Prioritätslogik entsprechend einem Zeitscheibenprinzip dem A/D-Wandler zugeordnet, so dass dessen Wandlungskapazität möglichst optimal genutzt werden kann. Diese Prioritätslogik ist relativ komplex und damit aufwändig.

Die Anforderungen an die obigen elektronischen Steuergeräte nehmen immer mehr zu, da zusätzliche Funktionen durch das Bremsensteuergerät mit übernommen werden bzw. die Bremssysteme eine verbesserte Regelgüte aufweisen sollen. Einige neuere Regelfunktionen, darunter die Kraftfahrzeuglängsregelung (ACC), welche den Abstand zu einem vorausfahrenden Fahrzeug konstant hält, fordern über die reine Möglichkeit der Einstellung eines analogen Stromes hinaus eine besonders präzise Stromregelung, da geringste Abweichungen vom gewünschten Stromwert spürbare Unterschiede im eingestellten Bremsdruck bewirken, so dass eine präzise ACC-Regelung mit entsprechendem Komfort nicht mehr möglich ist. Bei einer länger andauernden ACC-Regelung können zudem bereits leichte Unterschiede zwischen eingestelltem Druck in Vorder- und Hinterachse zu einem Ausfall der Bremsfunktion einer Achse führen. Insbesondere sollen relativ kleine Ströme im Bereich von etwa 100 bis 400 mA eine hohe Präzision aufweisen, da diese Ströme zum Einstellen kleiner Druckdifferenzen, wie sie für eine Längsregelung typisch sind, benötigt werden.

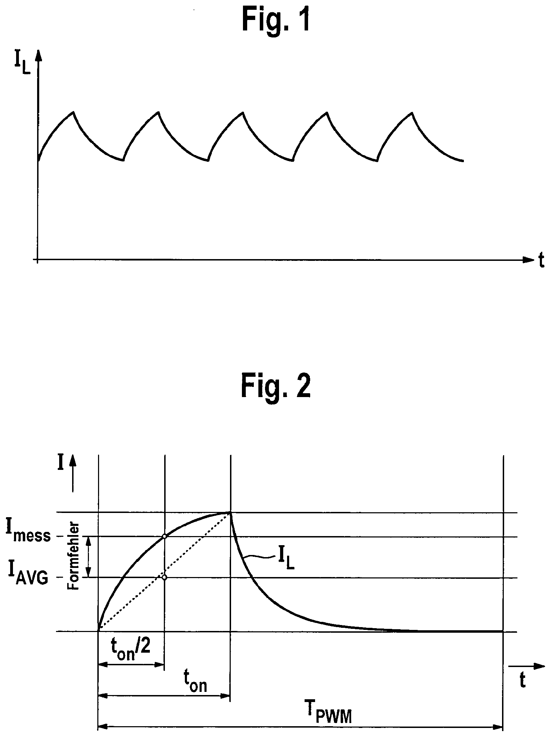

Bei Ventilansteuerungsschaltungen, die entsprechend den zuvor genannten Patentanmeldungen WO02/058967 A2 (P 10057) und WO03/039904 A2 (P 10253) ausgeführt sind, besteht daher der Bedarf, die Genauigkeit der PWM-Stromregelung noch weiter zu verbessern. Bei einer PWM-Regelung nach dem genannten Stand der Technik wird im üblichen Anwendungsfall der Bremsenregelung allgemein betrachtet eine induktive Last (z.B. Ventilspule) angesteuert. Die induktive Last besitzt eine bestimmte Induktivität L sowie einen ohmschen Widerstand R. Aus der Induktivität L lässt sich eine Zeitkonstante der Last L/R definieren. Abhängig von dieser Zeitkonstanten und der ansteuernden Frequenz der Pulsweitenmodulation entsteht ein typischer Verlauf des Laststroms I_{L} durch die induktive Last über der Zeit t, wie in Fig. 1 gezeigt. Durch den Einsatz eines A/D-Wandlers, welcher mehrfach zur Strommessung in unterschiedlichen Ventilansteuerungsschaltungen genutzt wird, kann nicht an mehreren Punkten des Stromverlaufs in Fig. 1 der Strom bestimmt werden. Die Messung des Stroms erfolgt daher, wie in den oben zitierten Dokumenten beschrieben, zu bestimmten Zeitpunkten (zeitdiskrete Messungen). Der auf diese Weise bestimmte Stromwert weicht je nach Messzeitpunkt beträchtlich vom eigentlich für die PWM-Regelung zu bestimmenden Mittelwert des Stromes ab. Diese Abweichung vom Mittelwert wird im Folgenden auch als Formfehler bezeichnet. Wird, wie in Fig. 2 dargestellt, der Stromwert beispielsweise regelmäßig in der Mitte der Einschaltphase zum Zeitpunkt t_{ON}/2 gemessen, entsteht der in Fig. 2 dargestellte Formfehler als Differenz von Mess- zu Mittelwert.

Der Formfehler wird jedoch nicht nur vom Messzeitpunkt der diskreten Strommessung beeinflusst, sondern auch von weiteren Betriebsparametern der PWM-Regelung, wie z.B. der an der Last anliegenden Spannung sowie vom temperaturabhängigen aktuellen ohmschen Widerstand der Last. Insbesondere integrierte Analogschaltungen erreichen nur mit sehr hohem Aufwand eine hohe Absolutgenauigkeit. Zwar ermöglichen beispielsweise an sich bekannte differentielle Schaltungstechniken und an sich bekannte Kalibrierungstechniken eine gewisse Unabhängigkeit gegenüber technologischen Schwankungen und Temperatureffekten, allerdings sind diesen Methoden aufgrund des hohen Aufwands Grenzen gesetzt. Ein Kalibrieren der Schaltung über die Temperatur würde nach der Fertigung einen sehr hohen Zeitaufwand erfordern und ist daher im Hinblick auf eine Fertigung mit hohen Stückzahlen wenig vorteilhaft.

Das in Fig. 2 dargestellte Strommessprinzip erfordert einen Mindestwert für die Einschaltdauer des PWM-Signals, damit in jeder Periode ein Stromwert unter allen Randbedingungen erfasst werden kann. Die Folge dieses Mindestwerts ist, dass sich abhängig vom ohmschen Widerstand der Spule, der high side-Spannung an der Induktivität und der eingestellten PWM-Frequenz ein minimaler Strom ergibt, unterhalb dessen keine Regelung mehr möglich ist. Im typischen Anwendungsfall einer ACC-Regelung für Kraftfahrzeuge lassen sich so beispielsweise nur Ströme bis minimal 200 mA einregeln. ACC-optimierte Strom-Bremsdruck-Kennlinien einer Ventilspule erfordern aber zumeist kleinere Ströme bis hinab zu etwa 100 mA.

Die Aufgabe der vorliegenden Erfindung besteht nun darin, einen elektronischen Regler und ein Verfahren zur Strommessung innerhalb eines elektronischen Reglers, mit PWM-Stromregelung vorzuschlagen, mit dem eine genauere und sicherere Stromeinstellung vorgenommen werden kann, wobei der elektronische Regler insbesondere relativ kostengünstig sein soll.

Die Aufgabe wird erfindungsgemäß gelöst durch den elektronischen Regler gemäß Anspruch 1 und das Verfahren gemäß Anspruch 15.

Der Erfindung liegt der Gedanke zu Grunde, einen elektronischen Regler für Kraftfahrzeugregelungssysteme mit mindestens einer elektronischen Strommessschaltung vorzuschlagen, welche mindestens einen Sigma-Delta-Modulator aufweist, der den durch eine im Wesentlichen induktive Last fließenden Laststrom misst, indem er ein analoges Messsignal des Laststroms in ein digitales Messsignal des Laststroms umwandelt.

Der Einsatz eines Sigma-Delta-Modulators hat zum einen den Vorteil, dass ein Laststrom durch Überabtastung eines analogen Messsignals des Laststroms gemessen werden kann, wodurch mehrere Stromwerte pro PWM-Periode erfasst werden und somit Formfehler verringert oder vermieden werden können. Zum anderen sind Sigma-Delta-Modulatoren relativ kostengünstig, weil ihr Auflösungsvermögen nicht nur von der Ordnung abhängt, sondern vor allem von der Taktrate, mit welcher diese betrieben werden und somit auch Modulatoren kleiner Ordnung verwendet werden können. So ist es bevorzugt, mindestens einen 1-bit Sigma-Delta-Modulator zur Strommessung einzusetzen, welcher besonders wenige Halbleiterelemente erfordert, damit günstig ist und dennoch eine hohe Auflösung über die Taktrate erreichen kann. Aufgrund dessen, dass solch ein Analog-/Digitalwandler relativ kostengünstig ist, kann davon zweckmäßigerweise mindestens einer in jeder Strommessschaltung, insbesondere jeweils einer pro PWM-Pfad, verwendet werden, wodurch eine komplexe und damit relativ aufwändige Prioritätslogik zur Ansteuerung eines einzelnen Analog-/Digitalwandlers seitens aller im Regler enthaltenen Strommessschaltungen, überflüssig wird. Es braucht auch kein relativ kostspieliger Präzisionswiderstand (Shunt) verwendet werden, da die Strommessung vorzugsweise direkt, also ohne Umwandlung des Stroms in eine entsprechende Spannung, durch den Sigma-Delta-Modulator erfolgt.

Auf Grund dessen, dass in der Literatur neben dem Begriff "Sigma-Delta-Modulator" auch der Begriff "Delta-Sigma-Modulator" für im Wesentlichen gleiche Analog-/Digitalwandler verwendet wird und über die korrekte Namensgebung keine erkennbar einheitliche Meinung vorherrscht, werden unter dem Begriff des "Sigma-Delta-Modulators" beide Begriffe und mögliche technische Ausführungen, welche einem oder beiden Begriffen zugeordnet werden beziehungsweise zugeordnet werden können, verstanden.

Unter einem Ausgangssignal bzw. einer Signalübertragung werden auch ein Datensignal und Ausgangdaten bzw. eine Datenübertragung verstanden.

Unter einem Messsignal des Laststroms wird ein Signal verstanden, welches vom Laststrom abhängig ist und vorzugsweise durch Skalierung des Laststroms erzeugt wird, wie beispielsweise mittels eines Sense-FETs und/oder welches insbesondere ein Spannungssignal ist, das über einem Shunt abgreifbar ist, der vom Laststrom durchflossen wird. Besonders bevorzugt fallen Signale unter diesen Begriff, welche den zeitlichen Verlauf einer Messgröße des Laststroms abbilden oder bezüglich mindestens einer Größe vom Laststrom abhängig sind. Alternativ fällt unter oben genannten Begriff auch das Laststromsignal an sich oder vorzugsweise ein anderes vom Laststrom abhängiges Signal, welches zur Messung des Laststroms vorgesehen ist.

Unter einer Ventilansteuerungsschaltung wird bevorzugt eine Schaltung verstanden, welche zumindest den Strom durch ein Ventil, vorzugsweise ein Hydraulikventil, welches eine im Wesentlichen induktive elektrische Last darstellt, regelt. Dabei verwendet die Ventilansteuerungsschaltung insbesondere eine Puls-Weiten-Modulation und weist zumindest einen Einschaltpfad mit einem Leistungstreiber und einen Rezirkulationspfad mit einem Leistungstreiber auf. Besonders bevorzugt wird unter einer Ventilansteuerungsschaltung eine PWM-Endstufe verstanden.

Unter einem Duty-Cycle wird das Verhältnis von Einschaltphase zur PWM-Periodendauer verstanden.

Die mindestens eine elektronische Strommessschaltung ist bevorzugt in der mindestens einen Ventilansteuerungsschaltung integriert beziehungsweise wird von dieser umfasst.

Der mindestens eine Sigma-Delta-Modulator der elektronischen Strommessschaltung des elektronischen Reglers führt zweckmäßigerweise eine Strommessung des Laststroms durch eine Überabtastung des analogen Messsignals des Laststroms durch, bei der die Taktrate des Sigma-Delta-Modulators deutlich größer ist als die Frequenz der Puls-Weiten-Modulation. Durch diese Maßnahme werden Formfehler weitgehend vermieden bzw. verringert.

Die elektronische Strommessschaltung des elektronischen Reglers weist vorzugsweise mindestens einen Sense-FET auf, der das analoge Messsignal des Laststroms direkt oder indirekt bereitstellt. Dabei ist der Gateanschluss dieses mindestens einen Sense-FETs insbesondere mit dem Gateanschluss mindestens eines Leistungstreibers des Einschaltpfades oder des Rezirkulationspfades verbunden. Zusätzlich sind die Drainanschlüsse und/oder die Sourceanschlüsse des jeweiligen Sense-FETs und des jeweiligen Leistungstreibers direkt oder indirekt miteinander verbunden oder gekoppelt. Diese Ausbildung der elektronischen Strommessschaltung erlaubt eine indirekte Strommessung, wobei der wirklich zu messende Strom um einen definierten Faktor geringer ausfällt, was es erlaubt, die messenden Bauelemente nicht unbedingt für Leistungsanwendungen auszulegen bzw. dies ist nur in entsprechend geringerem Maße erforderlich.

Es ist zweckmäßig, dass der mindestens eine Sigma-Delta-Modulator, insbesondere jeweils, aus einem Regelkreis besteht, welcher ein Integratorelement, insbesondere einen Integrator, besonders bevorzugt einen Kondensator oder ein anderes Bauelement oder eine elektronische Schaltung mit entsprechendem elektrischen Verhalten, einen Komparator und eine, insbesondere steuerbare, schaltbare Stromquelle aufweist. Diese schaltbare Stromquelle ist besonders bevorzugt so ausgebildet, dass sie verschiedene diskrete Stromwerte treiben kann und zwischen diesen verschiedenen Stromwerte umgeschaltet werden kann. Ganz besonders bevorzugt besteht diese schaltbare Stromquelle aus einer Parallelschaltung von Stromquellen, deren Ströme in definierter Weise addiert werden können und dieser Vorgang insbesondere vorzugsweise schaltbar ist.

Der Ausgang des mindestens einen Sigma-Delta-Modulators ist vorzugsweise an mindestens eine Mittelwertbildungseinrichtung angeschlossen. Insbesondere ist diese Mittelwertbildungseinrichtung ein Zählerelement oder alternativ ein exponentiell gewichteter, gleitender-Mittelwert-Filter (exponentially weighted moving average filter), der sich wie ein digitales Tiefpassfilter erster Ordnung verhält. Besonders bevorzugt ist das Zählerelement eine Schaltung, welche so ausgelegt ist oder angesteuert wird, dass sie digitale Daten aufsummiert. Ein solcher Zähler bzw. solches Zählerelement führt implizit eine Mittelwertbildung durch, da alle Daten des Sigma-Delta-Modulators pro Takt von diesem aufsummiert und damit berücksichtigt werden.

Die mindestens eine elektronische Strommessschaltung des elektronischen Reglers weist zweckmäßigerweise einen Einschaltpfad und einen Rezirkulationspfad auf, wobei jeder dieser Pfade mindestens einen Sigma-Delta-Modulator aufweist. Durch eine Strommessung auch während der Rezirkulationsphase kann die Stromregelung auch bei relativ geringen Strömen bzw. relativ geringen Duty-Cyclen mit hinreichender Präzision durchgeführt werden.

Es ist bevorzugt, dass sowohl der Einschaltpfad, als auch der Rezirkulationspfad jeweils mindestens einen Sense-FET aufweisen, wobei diese Sense-FETs direkt oder indirekt mit jeweils einem Sigma-Delta-Modulator verbunden sind.

Vorzugsweise misst der Sigma-Delta-Modulator des Einschaltpfades im Wesentlichen nur während der Einschaltphase und der Sigma-Delta-Modulator des Rezirkulationspfades im Wesentlichen nur während der Rezirkulationsphase einen Strom beziehungsweise erfasst einen Strom. Hierdurch wird der Strom während beider Phasen separat gemessen bzw. erfasst.

Das Ausgangssignal des Sigma-Delta-Modulators, also das digitale Messsignal des Laststroms, des Einschaltpfades und das Ausgangssignal des Sigma-Delta-Modulators des Rezirkulationspfades werden zweckmäßigerweise einer gemeinsamen Mittelwertbildungseinrichtung zugeführt, welche die Ausgangssignale beider Pfade verarbeitet, bzw. die elektronische Strommessschaltung ist entsprechend ausgelegt. Durch diese Maßnahme wird eine Summenbildung der beiden Strommessungen erreicht, die im Wesentlichen einer Summenbildung der beiden Messströme beider PWM-Pfade im Analogen entspricht. Die mindestens eine elektronische Strommessschaltung weist insbesondere mindestens ein Schaltungsmittel zur Kanalumschaltung auf, besonders bevorzugt einen Multiplexer, welches so ausgelegt ist, dass die Signalübertragung des Ausgangssignals des jeweiligen Sigma-Delta-Modulators der beiden PWM-Pfade an die gemeinsame Mittelwertbildungseinrichtung in Anhängigkeit der PWM-Phase geschieht. Also während der Einschaltphase misst bzw. erfasst der entsprechende Sigma-Delta-Modulator des Einschaltpfades den Laststrom und das Ausgangssignal dieses Sigma-Delta-Modulators wird an die gemeinsame Mittelwertbildungseinrichtung über dieses Schaltungsmittel zur Kanalumschaltung übertragen bzw. durchgestellt. Entsprechend verhält es sich mit dem Ausgangssignal des Sigma-Delta-Modulators des Rezirkulationspfades während der Rezirkulationsphase.

Der elektronische Regler ist bevorzugt so ausgelegt, dass er zumindest zu definierten Zeitpunkten, nach einer oder einer Mehrzahl von PWM-Perioden, den Dateninhalt einer oder mehrerer Mittelwertbildungseinrichtung/en bewertet und aus diesen Daten direkt oder indirekt den Laststrom, also den Strom durch die im Wesentlichen induktive Last, berechnet. Hierdurch werden eine Mittelwertbildung und eine Untertastung realisiert, wodurch das Messsignal geglättet wird. Außerdem ist die so zur Stromberechnung herangezogene Datenmenge groß genug um durch die Mittelwertbildung einen Formfehler relativ wirksam zu unterdrücken.

Die mindestens eine elektronische Strommessschaltung ist vorzugsweise so ausgelegt, dass das Ausgangssignal des jeweiligen Sigma-Delta-Modulators der beiden PWM-Pfade zusätzlich an jeweils eine zusätzliche Mittelwertbildungseinrichtung übertragen wird. Diese zusätzlichen Daten der Strommessung des jeweiligen PWM-Pfades werden entsprechend der Auslegung der elektronischen Strommessschaltung und/oder der Auslegung des elektronischen Reglers nur zu definierten Zeitpunkten oder bei Vorliegen einer definierten Datenmenge, insbesondere einem definierten Zählerstand, an eine Auswerteeinheit zu Fail-Safe- bzw. Plausibilisierungszwecken übertragen. Die jeweilige zusätzliche Mittelwertbildungseinrichtung umfasst besonders bevorzugt ein erstes Zählerelement, welches die "Einsen" des jeweiligen Sigma-Delta-Modulators zählt und ein zweites Zählerelement, welches die Anzahl der Samples bzw. die Anzahl der digitalen Ausgangsdaten zählt. Über den ersten Zählerstand, der im Prinzip die "Einsen" summiert und den zweiten Zählerstand, der die Anzahl der entsprechenden samples erfasst und summiert wird ein Mittelwert gebildet, aus welchem ein Stromwert zu Fail-Safe-Zwecken berechnet wird. Im Vergleich dazu beinhaltet die gemeinsame Mittelwertbildungseinrichtung ganz besonders bevorzugt nur ein Zählerelement welches die "Einsen" beider PWM-Pfade summiert. Hierbei erfolgt eine Mittelwertbildung über die definierte Anzahl der Samples einer PWM-Periode oder einem Vielfachen davon. Auf Grund dessen, dass die Anzahl dieser Sampels bekannt ist, wird kein weiteres Zählerelement benötigt. Das Auslesen der zusätzlichen Daten der zusätzlichen Mittelwertbildungseinrichtungen zu Fail-Safe-Zwecken, erfolgt vorzugsweise im Rahmen des erfindungsgemäßen Verfahrens seitens der Software eines Mikrocontrollers.

Es ist zweckmäßig, dass die mindestens eine elektronische Strommessschaltung so ausgelegt ist, dass beim Auftreten, insbesondere innerhalb mindestes einer definierten Anzahl von PWM-Perioden, sehr kleiner Duty-Cycles, besonders bevorzugt einem Duty-Cycle von jeweils unter 15%, der Leistungstreiber des Einschaltpfades zu definierten Zeitpunkten für einen relativ kurzen, definierten Zeitraum, angeschaltet wird, um die Datenmenge der Strommessung des Einschaltpfades zu erhöhen.

Bevorzugt ist die mindestens eine elektronische Strommessschaltung so ausgelegt, dass beim Auftreten, insbesondere innerhalb mindestes einer definierten Anzahl von PWM-Perioden, sehr großer Duty-Cycles, besonders bevorzugt einem Duty-Cycle von jeweils über 85%, der Leistungstreiber des Einschaltpfades zu definierten Zeitpunkten für einen relativ kurzen, definierten Zeitraum, ausgeschaltet wird, um die Datenmenge der Strommessung des Rezirkulationspfades zu erhöhen.

Vorzugsweise ist die mindestens eine elektronische Strommessschaltung so ausgelegt, dass die Daten mindestens einer Mittelwertbildungseinrichtung, insbesondere eines Zählers, nur mindestens alle drei PWM-Perioden ausgewertet werden, um die Datenbasis für die Strommessung hinsichtlich einer Mittelwertbildung zu vergrößern und die Störung der Stromregelung, besonders bevorzugt auf Grund von absichtlichen Störungen zu Messzwecken, dadurch zu verringern.

Die mindestens eine elektronische Strommessschaltung ist bevorzugt so ausgelegt, dass in jeder PWM-Periode mindestes eine zumindest sehr kurze Einschaltphase erfolgt und/oder ebenfalls in jeder PWM-Periode mindestes eine zumindest sehr kurze Rezirkulationsphase erfolgt. Insbesondere ist mindestens eine, besonders bevorzugt jede, Ventilansteuerungsschaltung entsprechend ausgelegt.

Es ist bevorzugt, dass die mindestens eine elektronische Strommessschaltung als integrierte Schaltung ausgebildet ist und insbesondere in dem elektronischen Regler, welcher auch als integrierte Schaltung ausgebildet ist, integriert ist.

Der Erfindung liegt außerdem der Gedanke zu Grunde, ein Verfahren zur Strommessung in einem elektronischen Regler für Kraftfahrzeugregelungssysteme vorzuschlagen, bei dem in mindestens einem Signalpfad einer elektronischen Strommessschaltung ein analoges Messsignal eines Laststroms mittels einer Sigma-Delta-Modulation in ein digitales Messsignal des Laststroms umgewandelt wird. Dabei wird vorzugsweise eine Strommessung mittels der Sigma-Delta-Modulation durchgeführt.

Es ist zweckmäßig, dass das digitale Messsignal des Laststroms eines Einschaltpfades und das digitale Messsignal des Laststromes eines Rezirkulationspfades jeweils innerhalb einer PWM-Periode oder einer Vielzahl von PWM-Perioden einzeln und/oder zusammen, aufsummiert wird/werden und dass aus dieser mindestens einen Summe ein gemeinsamer Stromwert berechnet wird, welcher der eigentlichen Strommessung zu Grunde gelegt wird. Insbesondere werden zusätzlich die digitalen Messsignale des Laststroms der beiden PWM-Pfade jeweils getrennt aufsummiert und besonders bevorzugt nach einer definierten Zeit und/oder bei Vorliegen mindestens einer definierten Datenmenge, abgespeichert. Diese zusätzlichen Strommess-Daten der jeweiligen Einzel-PWM-Pfade werden ganz besonders bevorzugt zu Plausibilisierungszwecken und/oder Fail-Safe-Zwecken verwendet und in einem Microkontroller ausgewertet.

Die Merkmale des elektronischen Reglers, sowie die Merkmale der beschriebenen Ausführungsbeispiele sind bevorzugt auch Merkmale, welche im Zuge des Verfahrens durchgeführt werden können.

Die Erfindung betrifft außerdem die Verwendung des elektronischen Reglers in einem Kraftfahrzeugregelungssystem.

Der erfindungsgemäße elektronische Regler sowie das erfindungsgemäße Verfahren werden bevorzugt in elektronischen Kraftfahrzeugbremssystemen, bei denen elektromagnetische Hydraulikventile über Puls-Weiten-Modulation in Ventilansteuerungsschaltungen angesteuert werden, zur Einstellung des Hydraulikdrucks in Radbremsen des Kraftfahrzeugs, verwendet. Alternativ ist eine Verwendung in einem servounterstützten Lenkungssystem eines Kraftfahrzeuges vorgesehen, wobei der erfindungsgemäße elektronische Regler das mindestens eine Hydraulikventil ansteuert.

Weitere bevorzugte Ausführungsformen ergeben sich aus den Unteransprüchen und der nachfolgenden Beschreibung von Ausführungsbeispielen an Hand von Figuren.

Es zeigen in schematischer Darstellung
- Fig. 1: den Stromverlauf durch eine PWM-geregelte induktive Last bei einer Regelungsschaltung nach dem Stand der Technik,
- Fig. 2: nur eine PWM-Periode des Fig. 1 entsprechenden Stromverlaufs nach dem Stand der Technik,
- Fig. 3: eine schematische Darstellung einer Ventilansteuerungsschaltung mit Rezirkulationspfad nach dem Stand der Technik,
- Fig. 4: ein Ausführungsbeispiel der elektronischen Strommessschaltung des elektronischen Reglers für den Einschaltpfad,
- Fig. 5: eine beispielhafte elektronische Strommessschaltung des elektronischen Reglers, welche Schaltungselemente zur Auswertung beider Messpfade aufweist,
- Fig. 6: eine alternativ beispielhafte elektronische Strommessschaltung des elektronischen Reglers, mit Trimm-Elementen und
- Fig. 7: die zeitlichen, beispielgemäßen Verläufe der Spannung am Integrierer der Strommessschaltung und des entsprechenden, zu messenden Laststroms.

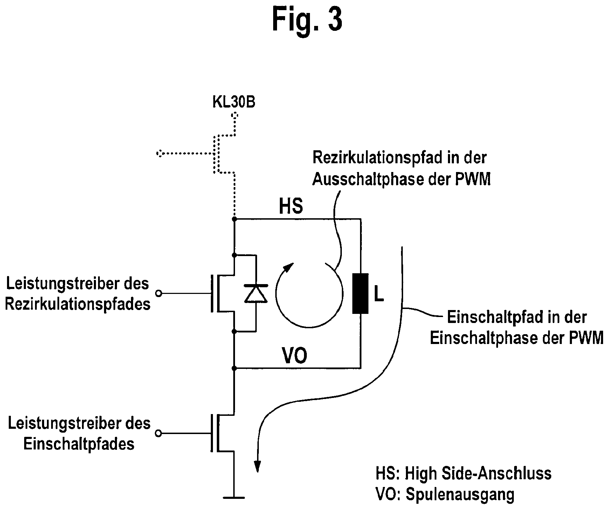

Die in Fig. 3 dargestellte schematisierte Darstellung einer Ventilansteuerungsschaltung mit einem Leistungstreiber des Einschaltpfades und einem Leistungstreiber des Rezirkulationspfades dient zur Erläuterung der dargestellten Ströme während einer PWM-Ansteuerung der induktiven Last L. Über den Leistungstreiber des Einschaltpfades wird Last L gegen Masse geschaltet, wodurch der Spulenstrom bei noch nicht erreichtem Maximalstrom exponentiell ansteigt. Im abgeschalteten Zustand der PWM-Ansteuerung ist der Leistungstreiber des Rezirkulationspfades leitend, so dass der Abklingstrom der Spule über den Rezirkulationspfad fließen kann. Dies führt zu einem exponentiellen Abklingen des Stroms.

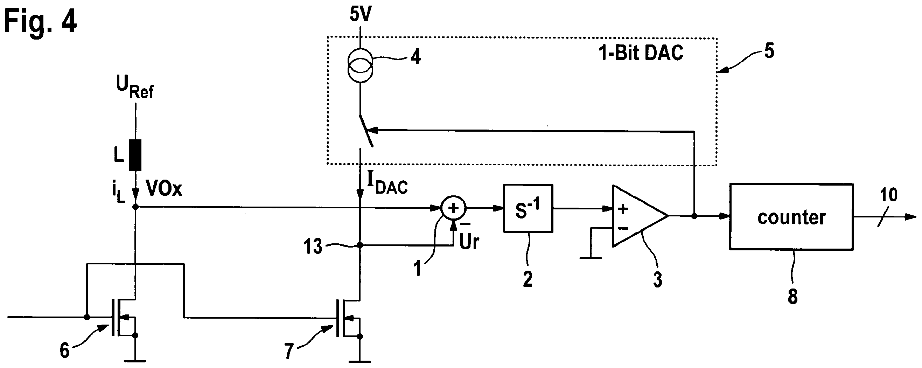

In Fig. 4 ist eine beispielhafte Ausführungsform der elektronischen Strommessschaltung des elektronischen Reglers schematisch dargestellt. Diese Strommessschaltung umfasst dabei lediglich die Strommessung des Einschaltpfades einer Ventilansteuerungsschaltung. Laststrom i_{L}, welcher sich aufgrund der Spannung U_{Ref} über Induktivität L und dem Kanalwiderstand des Leistungstreibers 6 gegen Masse bei eingeschaltetem Leistungstreiber 6 des Einschaltpfades einstellt und durch Induktivität L fließt, soll gemessen werden. Induktivität L entspricht dabei dem induktiven Verhalten einer Ventilspule. Potential VOx liegt am Knotenpunkt zwischen L und Power-FET an. Potential VOx ist Führungsgröße eines daran angeschlossenen Regelkreises. Dieser beinhaltet einen Summenpunkt 1, an welchen Führungsgröße VOx und Rückführgröße Uᵣ angreifen, wobei aufgrund der Gegenkopplung eine Differenz dieser beiden Größen VOx und Uᵣ an Summenpunkt 1 gebildet wird. Summenpunkt 1 ist beispielgemäß als analoger Summierer ausgebildet, der durch eine Operationsverstärkerschaltung realisiert ist. An Summenpunkt 1 ist Integrierer 2 angeschlossen, der als Regler verwendet wird und dessen Ausgang das Eingangspotential Komparators 3 gegen Masse bildet. Komparator 3 ist Teil der Regelstrecke des Regelkreises und wird beispielgemäß getaktet betrieben. Der Ausgang des Regelkreises wird über einen 1-bit DAC 5 zurückgeführt. Dabei ist der 1-bit DAC als eine schaltbare Stromquelle 4 realisiert, die einen definierten Referenzstrom durch einen Sense-FET 7 gegen Masse treibt. Dieser Sense-FET 7 ist im Fall einer Regelung durchgeschaltet und weist einen definierten Kanalwiderstand auf, aufgrund dessen am Knotenpunkt zwischen 1-Bit DAC 5 und Sense-FET 7 eine entsprechende Spannung Uᵣ anliegt, welche als Rückführgröße an Summenpunkt 1 invertiert anliegt, wodurch eine entsprechende Gegenkopplung des Regelkreises erreicht wird. Die Gateanschlüsse des Leistungstreibers 6 und Sense-FETs 7 sind miteinander verbunden, wodurch diese beiden Transistoren zusammen angesteuert werden, das heißt, der Regelkreis ist nur in Betrieb, wenn Leistungstreiber 6 durchgeschaltet ist. Die Sigma-Delta-Modulation wird beispielgemäß mit einer Frequenz durchgeführt, welche 256-mal so hoch ist, wie die Frequenz der PWM. Dies entspricht einer 256-fachen Überabtastung (oversampling). Hierzu wird Komparator 3 mit dieser Überabtastungsfrequenz getaktet betrieben. Das Ausgangssignal Komparators 3, steuert nicht nur schaltbare Stromquelle 4 an, sondern diese Ausgangsdaten werden an einen Zähler 8 übertragen und in diesem gespeichert. Zähler 8 zählt dabei jede "1" des Komparatorausgangs. Zu jeder PWM-Periode wird der Zählerstand, welcher beispielhaft eine Datenwortbreite von 10 bit aufweist, an eine Auswerteeinheit übertragen, die aus diesem Datenwort einen Stromwert berechnen kann. Dieser Stromwert bezieht sich beispielgemäß allerdings nur auf den, während der Einschaltphase der Puls-Weiten-Modulation, erfassten Strom. Das Speichern beziehungsweise Aufsummieren der Datenworte (samples) in Zähler 8 entspricht dabei einer Mittelwertbildung im Rahmen der Strommessung. Die anschließende Untertastung erfolgt durch das Auslesen Zählers 8 im Takt der PWM. Durch die Mittelwertbildung wird im Übertragenen Sinn eine Glättung der Strommessung durchgeführt. Dies ist vergleichbar mit einer analogen Tiefpassfilterung des zu messenden Stromes i_{L}.

Die Dimensionierung des Messbereichs der Strommessschaltung kann, wie im Folgenden beispielgemäß beschrieben, gewählt werden: Das Spiegelverhältnis beziehungsweise das Verhältnis der Drain-Source-Kanalwiderstände (W/L-ratio) Leistungstreibers 6 zu Sense-FET 7 beträgt 500. Wenn nun ein Strom bis zu einer oberen Messbereichsgrenze von 2A gemessen werden soll, so muss schaltbare Stromquelle 4 einen Strom von 4mA abgeben. Bezüglich dieser Werte ergibt sich über den Regelkreis des Sigma-Delta-Modulators ein Messbereich von 2A. Die Auslegung der Stromquelle bestimmt also maßgeblich den Messbereich mit. In einem nicht dargestellten Ausführungsbeispiel ist zur Einstellung des Messbereichs schaltbare Stromquelle 4 als regelbare Stromquelle ausgebildet. In einem ebenfalls nicht dargestellten Ausführungsbeispiel ist eine zusätzliche, zuschaltbare Stromquelle oder eine zusätzliche zuschaltbare Parallelschaltung von Stromquellen an Knotenpunkt 13, zwischen schaltbarer Stromquelle 4 und dem Drainanschluss Sense-FETs 4, angeschlossen. Durch diese Stromquelle/n lässt sich der Messbereich der Strommessschaltung verändern, bzw. beispielgemäß erweitern und durch ein Zu- bzw. Wegschalten zusätzlicher Stromquellen wird damit eine Bereichsumschaltung realisiert.

In einem nicht dargestellten Ausführungsbeispiel ist Integrierer 2 durch einen Kondensator mit definierter Kapazität realisiert.

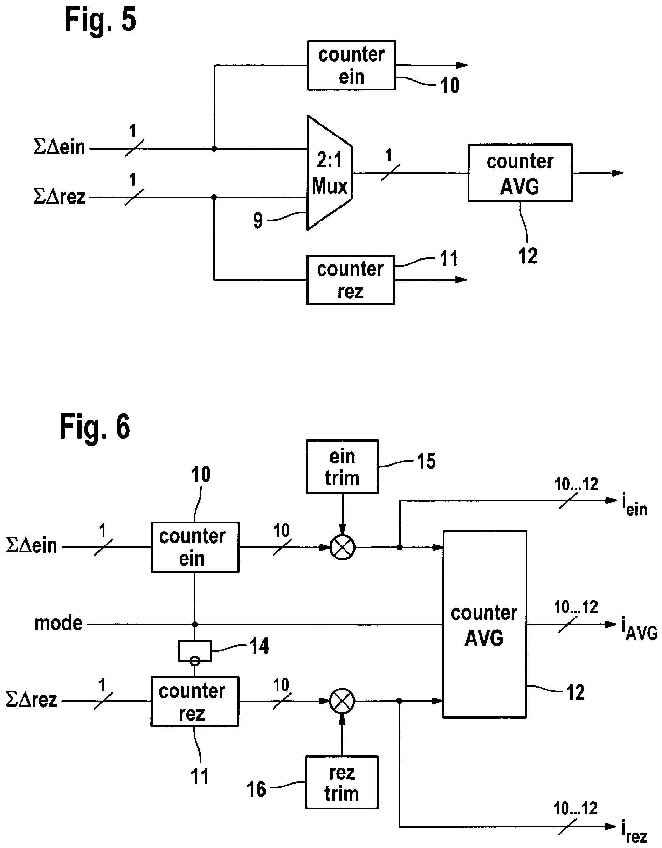

In Fig. 5 ist ein schematisches Ausführungsbeispiel einer erweiterten elektronischen Strommessschaltung dargestellt. Dabei wird sowohl im Einschaltpfad als auch im Rezirkulationspfad der Laststrom mittels eines Sigma-Delta-Modulators, in nicht dargestellter Weise indirekt erfasst. Die Datenworte der jeweiligen Sigma-Delta-Modulatoren werden bitweise über jeweils eine Leitung an den dargestellten Teil der Strommessschaltung übertragen, wobei Datensignal ΣΔein dem Ausgang des Sigma-Delta-Modulators des Einschaltpfades und Datensignal ΣΔrez dem Ausgang des Sigma-Delta-Modulators des Rezirkulationspfades entspricht. Diese beiden Datensignale werden Multiplexer 9 zugeführt. Multiplexer 9 wird in nicht veranschaulichter Weise so angesteuert, dass jeweils der Eingangskanal des Pfades durchgeschaltet wird, der gerade aktiv ist, also Datensignal ΣΔein wird durchgeschaltet während der Einschaltphase der PWM und damit während der aktiven Stromerfassung des Einschaltpfades und Datensignal ΣΔrez wird entsprechend während der Rezirkulationsphase der PWM durchgeschaltet. Der Ausgang Multiplexers 9 ist mit einem Zähler 12 verbunden, welcher die Datenworte beider Stromerfassungspfade und damit beider Sigma-Delta-Modulatoren summiert und speichert. Das Aufsummieren der Datensignale bzw. samples beider PWM-Strommesspfade entspricht einer Summation beider Messströme der beiden PWM-Pfade im Analogen. Zähler 12 bildet außerdem einen allgemeinen Mittelwert des erfassten Stromes. Dieser Mittelwert wird beispielgemäß alle zwei PMW-Perioden an eine Auswerteschaltung übertragen bzw. von dieser ausgelesen. Der Zählerstand z ist dabei ein Anteil einer Zahl zₘₐₓ, welche sich aus der Summe aller möglichen "1"-Datenworte, ergibt. Bei einer 256-fachen Überabtastung und einer Übertragung des Zählerwerts Zählers 12 jeweils alle 2 PWM-Perioden ergibt sich zₘₐₓ zu 512. Der gemessene Stromwert ergibt sich aus dem Quotienten z/ zₘₐₓ multipliziert mit der oberen Grenze des Messbereichs der beiden Sigma-Delta-Modulatoren der beiden PWM-Pfade. Zusätzlich werden die Datensignale ΣΔein und ΣΔrez jeweils einem weiteren Zähler 10, 11 zugeführt. Beispielgemäß werden die Datenworte dieser beiden Zähler 10, 11 zu definierten Zeitpunkten oder beim Auftreten bestimmter Datenworte in einer Speichereinheit gespeichert. Die Speichereinheiten werden dabei softwareseitig ausgelesen, wobei diese Daten, welche Informationen bezüglich des erfassten Stroms in jeweils den separaten PWM-Pfaden beinhalten, zu Fail-Safe-Zwecken bzw. zur Plausibilisierung verwendet werden.

Fig. 6 zeigt ein Ausführungsbeispiel der elektronischen Strommessschaltung, welches für die Datensignale der beiden Sigma-Delta-Modulatoren ΣΔein und ΣΔrez jeweils einen separaten Zähler 10, 11 aufweist. Diese beiden Zähler sind so ausgebildet, dass sie die Strommessdaten, welche während einer kompletten PWM-Periode erfasst werden, speichern können. Außerdem weist diese beispielhafte Strommessschaltung die Möglichkeit einer Trimmung auf. Die Parametrisierung dieser Trimmung findet in einem Testmode statt, beispielgemäß im Rahmen der Produktion bzw. beim anschließenden Testen der Strommessschaltung. Zum Test der Strommessschaltung wird ein definierter, konstanter Teststrom im Lastpfad eingestellt. Im Rahmen der Strommessung beider PWM-Pfade ergibt sich ein gemessener Stromwert. Die Strommessung in beiden PWM-Pfaden kann dabei nacheinander oder abwechselnd durchgeführt werden. Die Abweichung des gemessenen Stroms vom definierten, konstanten Teststrom ist dabei erfahrungsgemäß hauptsächlich auf ein ungenaues Spiegelverhältnis der jeweiligen Leistungsstufe zum jeweiligen Sense-FET und/oder auf eine ungenau eingestellte bzw. dimensionierte Stromquelle zurückzuführen. Die Abweichung wird während der Parametrisierung der Trimmung als ein Ausgleichsfaktor ausgewertet, wobei dieser Ausgleichsfaktor multipliziert mit dem gemessenen Strom, den wahren Stromwert ergibt. Dieser Ausgleichsfaktor wird jeweils für Einschalt- und Rezirkulationspfad in einem Speicherelement 15, 16, beispielhaft einem ROM, gespeichert. In der beispielhaften elektronischen Strommessschaltung wird der Ausgang der beiden Zähler 10 und 11 jeweils mit dem Ausgleichsfaktor aus Speichern 15 und 16 multipliziert. Diese beiden Datensignale werden jeweils sowohl einem gemeinsamen Zähler 12 zugeführt, als auch einzeln zu einer Fail-Safe-Strommessung verwendet. Die Übertragung der Daten an Zähler 12 wird über ein Signal mode gesteuert, welches die Information darüber beinhaltet, ob der Einschaltpfad oder der Rezirkulationspfad, inklusive des jeweiligen Strommesspfades gerade aktiv ist. Dabei wird das Signal für Zähler 10 durch Inverter 14 invertiert, wodurch erreicht wird, dass jeweils nur ein Zähler 10, 11 seine Daten überträgt. Das Signal mode ist außerdem an Zähler 12 angeschlossen. Aus Signal mode bzw. dessen zeitlichem Verlauf berechnet eine Auswertungseinrichtung außerdem die Größe des Duty-Cycles pro jeweiliger PWM-Periode. Die Ansteuerung der Zähler 10, 11, 12 ist mit einem Multiplexvorgang vergleichbar. Das Datenwort Zählers 12 wird beispielgemäß alle zwei PWM-Perioden ausgelesen und aus diesem wird dabei in einer Auswertungseinrichtung ein Stromwert berechnet. Diese Berechnung beinhaltet eine Gewichtung der beiden Datensignale der jeweiligen PWM-Pfade bezüglich der Größe des Duty-Cycles (Duty-Cycle-weighted-Average). Dabei wird beispielhaft das Datenwort der Einschaltpfades mit dem Duty-Cycle multipliziert und das Datenwort des Rezirkulationspfades mit "1-Duty-Cycle" multipliziert und diese beiden Produkte werden anschließend addiert.

Die Auswertungseinrichtung ist in einem nicht dargestellten Ausführungsbeispiel in Zähler 12 intergriert oder alternativ einzeln oder mitsamt der elektronischen Strommessschaltung im elektronischen Regler integriert oder als Software realisiert.

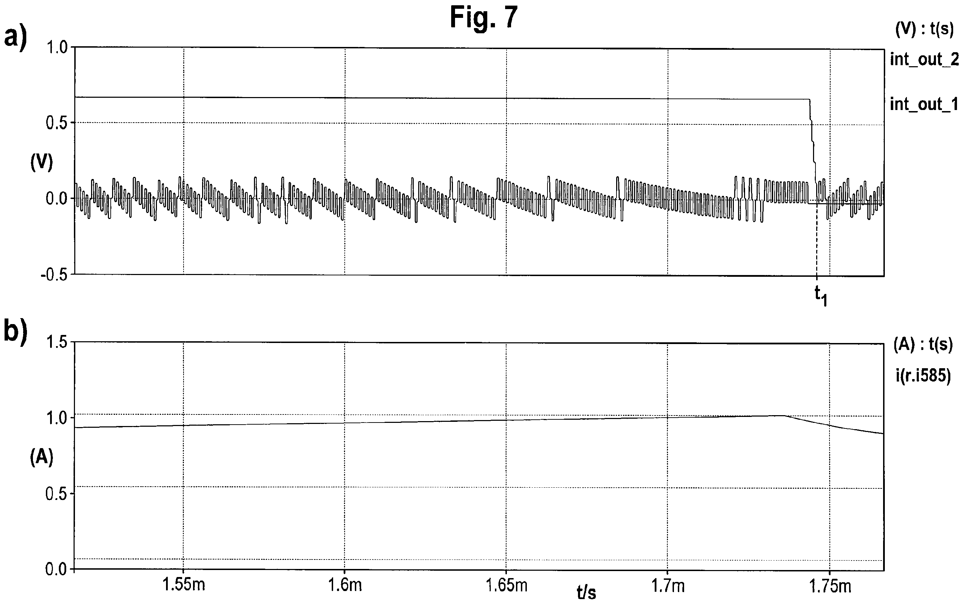

Der obere Graph a) von Fig. 7 veranschaulicht den zeitlichen Spannungsverlauf am Integrierer des Sigma-Delta-Modulators. Der untere Graph b) zeigt den zu messenden Laststrom in Abhängigkeit von der Zeit. Der Spannungsverlauf unter a) zeigt, wie das Spannungspotential über einen gewissen Zeitraum am Integrierer ansteigt, wobei dies in Abhängigkeit des zu messenden Stroms und der Änderung des zu messenden Stroms erfolgt. Erreicht das Spannungspotential am Integrierer einen definierten relativen Schwellwert, wird innerhalb des Regelkreises die schaltbare Stromquelle eingeschaltet und ein negatives Spannungspotential, welches sich aus dem Strom der geschalteten Stromquelle durch den Sense-FET ergibt, am Kontenpunkt des Regelkreises angelegt, wodurch sich der Spannungswert sprunghaft, wie veranschaulicht, ändert. Jeder Spannungssprung in Fig. 7a) entspricht somit einer "1" am Datenausgang des Sigma-Delta-Modulators. Zum Zeitpunkt t₁ zeigt Fig. 7a) den Wechsel des Spannungsverlaufs am Integrierer zwischen dem Einschaltpfad (t< t₁) und dem Rezirkulationspfad (t> t₁).

## Patentansprüche

1. Elektronischer Regler für Kraftfahrzeugregelungssysteme mit mindestens einer Ventilansteuerungsschaltung, welche mittels einer Puls-Weiten-Modulation den durch eine im Wesentlichen induktive Last (L) fließenden Laststrom (i_{L}) regelt, und mit mindestens einer elektronischen Strommessschaltung, welche mindestens einen Analog-/Digitalwandler aufweist, der ein analoges Messsignal des Laststroms (i_{L}) in ein digitales Messsignal des Laststroms (i_{L}) umwandelt, wobei der mindestens eine Analog-/Digitalwandler ein Sigma-Delta-Modulator ist **dadurch gekennzeichnet dass** der Ausgang des Sigma-Delta-Modulators an mindestens eine Mittelwertbildungseinrichtung (8,10,11,12) angeschlossen ist.

2. Elektronischer Regler nach Anspruch 1, **dadurch gekennzeichnet, dass** der mindestens eine Sigma-Delta-Modulator der elektronischen Strommessschaltung eine Strommessung des Laststroms (i_{L}) durch eine Überabtastung des analogen Messsignals des Laststroms (i_{L}) durchführt, bei der die Taktrate des Sigma-Delta-Modulators deutlich größer ist als die Frequenz der Puls-Weiten-Modulation.

3. Elektronischer Regler nach Anspruch 1 oder 2, **dadurch gekennzeichnet, dass** die elektronische Strommessschaltung mindestens einen Sense-FET (7) aufweist, der das analoge Messsignal des Laststroms (i_{L}) direkt oder indirekt bereitstellt.

4. Elektronischer Regler nach Anspruch 3, **dadurch gekennzeichnet, dass** der Gateanschluss des mindestens einen Sense-FETs (7) mit dem Gateanschluss mindestens eines Leistungstreibers (6) des Einschaltpfades oder des Rezirkulationspfades verbunden ist und die Drainanschlüsse und/oder die Sourceanschlüsse des jeweiligen Sense-FETs (7) und des jeweiligen Leistungstreibers (6) direkt oder indirekt miteinander verbunden oder gekoppelt sind.

5. Elektronischer Regler nach mindestens einem der Ansprüche 1 bis 4, **dadurch gekennzeichnet, dass** der Sigma-Delta-Modulator aus einem Regelkreis besteht, welcher ein Integratorelement (2), einen Komparator (3) und eine, insbesondere steuerbare, schaltbare Stromquelle (4) aufweist.

6. Elektronischer Regler nach mindestens einem der Ansprüche 1 bis 5, **dadurch gekennzeichnet, dass** die Mittelwertbildungseinrichtung ein Zählerelement (8,10,11,12) ist.

7. Elektronischer Regler nach mindestens einem der Ansprüche 1 bis 6, **dadurch gekennzeichnet, dass** dessen mindestens eine elektronische Strommessschaltung einen Einschaltpfad und einen Rezirkulationspfad aufweist und jeder dieser Pfade mindestens einen Sigma-Delta-Modulator aufweist.

8. Elektronischer Regler nach Anspruch 7, **dadurch gekennzeichnet, dass** sowohl der Einschaltpfad, als auch der Rezirkulationspfad jeweils mindestens einen Sense-FET (7) aufweisen, wobei diese Sense-FETs (7) direkt oder indirekt jeweils mit einem Sigma-Delta-Modulator verbunden sind.

9. Elektronischer Regler nach Anspruch 7 oder 8, **dadurch gekennzeichnet, dass** der Sigma-Delta-Modulator des Einschaltpfades im Wesentlichen nur während der Einschaltphase einen Strom misst und dass der Sigma-Delta-Modulator des Rezirkulationspfades im Wesentlichen nur während der Rezirkulationsphase einen Strom misst.

10. Elektronischer Regler nach mindestens einem der Ansprüche 7 bis 9, **dadurch gekennzeichnet, dass** das Ausgangssignal des Sigma-Delta-Modulators des Einschaltpfades und das Ausgangssignal des Sigma-Delta-Modulators des Rezirkulationspfades einer gemeinsamen Mittelwertbildungseinrichtung (12) zugeführt werden, welche die Ausgangssignale beider Pfade verarbeitet.

11. Elektronischer Regler nach Anspruch 10, **dadurch gekennzeichnet, dass** die mindestens eine elektronische Strommessschaltung mindestens ein Schaltungsmittel zur Kanalumschaltung (9) aufweist, welches so ausgelegt ist, dass die Signalübertragung des Ausgangssignals des jeweiligen Sigma-Delta-Modulators der beiden PWM-Pfade an die gemeinsame Mittelwertbildungseinrichtung (12) in Abhängigkeit der PWM-Phase geschieht.

12. Elektronischer Regler nach mindestens einem der vorhergehenden Ansprüche, **dadurch gekennzeichnet, dass** dieser so ausgelegt ist, dass er zumindest zu definierten Zeitpunkten, nach einer oder einer Mehrzahl von PWM-Perioden, den Dateninhalt einer oder mehrerer Mittelwertbildungseinrichtung/en (8,10,11,12) bewertet und aus diesen Daten direkt oder indirekt den Laststrom (i_{L}) berechnet.

13. Elektronischer Regler nach mindestens einem der Ansprüche 7 bis 12, **dadurch gekennzeichnet, dass** dessen mindestens eine elektronische Strommessschaltung so ausgelegt ist, dass das Ausgangssignal des jeweiligen Sigma-Delta-Modulators der beiden PWM-Pfade zusätzlich an jeweils eine zusätzliche Mittelwertbildungseinrichtung (10,11) übertragen wird.

14. Verfahren zur Strommessung in einem elektronischen Regler für Kraftfahrzeugregelungssysteme, der in mindestens einer Ventilansteuerungsschaltung einen durch eine im Wesentlichen induktive Last (L) fließenden Laststrom (i_{L}) mittels Puls-Weiten-Modulation regelt, wobei das Verfahren insbesondere mit einem elektronischen Regler gemäß mindestens einem der Ansprüche 1 bis 13 durchgeführt wird und wobei bei dem Verfahren in mindestens einem Signalpfad einer elektronischen Strommessschaltung ein analoges Messsignal des Laststroms (i_{L}) mittels eines Analog-/Digitalwandlers in ein digitales Messsignal des Laststroms (i_{L}) umgewandelt wird, wobei die Analog-/Digitalwandlung durch eine Sigma-Delta-Modulation durchgeführt wird. **dadurch gekennzeichnet, dass** der Ausgang des Wandlers einer Mittelwertbildungseinrichtung zugeführt wird.

15. Verfahren nach Anspruch 14, **dadurch gekennzeichnet, dass** das digitale Messsignal des Laststroms (i_{L}) eines Einschaltpfades und das digitale Messsignal des Laststroms (i_{L}) eines Rezirkulationspfades jeweils innerhalb einer PWM-Periode oder einer Vielzahl von PWM-Perioden einzeln und/oder zusammen, aufsummiert wird/werden und dass aus dieser mindestens einen Summe ein gemeinsamer Stromwert berechnet wird, welcher der eigentlichen Stromregelung zu Grunde gelegt wird.

16. Verwendung des elektronischen Reglers gemäß mindestens einem der Ansprüche 1 bis 13 in einem Kraftfahrzeugbremssystem.

## Claims

1. Electronic controller for motor vehicle control systems having at least one valve actuation circuit, which uses pulse width modulation to control the load current (i_{L}) flowing through an essentially inductive load (L), and having at least one electronic current measuring circuit which has at least one analog/digital converter which converts an analog measurement signal for the load current (i_{L}) into a digital measurement signal for the load current (i_{L}), wherein the at least one analog/digital converter is a sigma-delta modulator, **characterized in that** the output of the sigma-delta modulator is connected to at least one averaging device (8, 10, 11, 12).

2. Electronic controller according to Claim 1, **characterized in that** the at least one signal-delta modulator in the electronic current measuring circuit performs current measuring for the load current (i_{L}) by oversampling the analog measurement signal for the load current (i_{L}), wherein the clock rate of the sigma-delta modulator is significantly higher than the frequency of the pulse width modulation.

3. Electronic controller according to Claim 1 or 2, **characterized in that** the electronic current measuring circuit has at least one sense FET (7) which provides the analog measurement signal for the load current (I_{L}) directly or indirectly.

4. Electronic controller according to Claim 3, **characterized in that** the gate connection of the at least one sense FET (7) is connected to the gate connection of at least one power driver (6) in the switch-on path or in the recirculation path, and the drain connections and/or the source connections of the respective sense FET (7) and of the respective power driver (6) are connected or coupled to one another directly or indirectly.

5. Electronic controller according to at least one of Claims 1 to 4, **characterized in that** the sigma-delta modulator comprises a control loop which has an integrator element (2), a comparator (3) and a, in particular controllable, switchable current source (4).

6. Electronic controller according to at least one of Claims 1 to 5, **characterized in that** the averaging device is a counter element (8, 10, 11, 12).

7. Electronic controller according to at least one of Claims 1 to 6, **characterized in that** its at least one electronic current measuring circuit has a switch-on path and a recirculation path and each of these paths has at least one sigma-delta modulator.

8. Electronic controller according to Claim 7, **characterized in that** both the switch-on path and the recirculation path each have at least one sense FET (7), these sense FETs (7) being connected to a respective sigma-delta modulator directly or indirectly.

9. Electronic controller according to Claim 7 or 8, **characterized in that** the sigma-delta modulator in the switch-on path measures a current essentially only during the switched-on phase and **in that** the sigma-delta modulator in the recirculation path measures a current essentially only during the recirculation phase.

10. Electronic controller according to at least one of Claims 7 to 9, **characterized in that** the output signal from the sigma-delta modulator in the switch-on path and the output signal from the sigma-delta modulator in the recirculation path are supplied to a common averaging device (12) which processes the output signals from both paths.

11. Electronic controller according to Claim 10, **characterized in that** the at least one electronic current measuring circuit has at least one circuit means for channel switching (9) which is designed such that the signal transmission for the output signal from the respective sigma-delta modulator in the two PWM paths to the common averaging device (12) is effected on the basis of the PWM phase.

12. Electronic controller according to at least one of the preceding claims, **characterized in that** it is designed such that it assesses the data content of one or more averaging device(s) (8, 10, 11, 12) at least at defined times, after one or more PWM periods, and uses these data to calculate the load current (i_{L}) directly or indirectly.

13. Electronic controller according to at least one of Claims 7 to 12, **characterized in that** its at least one electronic current measuring circuit is designed such that the output signal from the respective sigma-delta modulator in the two PWM paths is additionally transmitted to a respective additional averaging device (10, 11).

14. Method for measuring current in an electronic controller for motor vehicle control systems which uses pulse width modulation in at least one valve actuation circuit to control a load current (i_{L}) flowing through an essentially inductive load (L), wherein the method is carried out particularly using an electronic controller according to at least one of Claims 1 to 13 and wherein the method involves an analog/digital converter in at least one signal path of an electronic current measuring circuit being used to convert an analog measurement signal for the load current (i_{L}) into a digital measurement signal for the load current (i_{L}), wherein the analog/digital conversion is performed by sigma-delta modulation, **characterized in that** the output of the converter is fed to an averaging device.

15. Method according to Claim 14, **characterized in that** the digital measurement signal for the load current (i_{L}) in a switch-on path and the digital measurement signal for the load current (i_{L}) in a recirculation path is/are respectively summed individually and/or together within a PWM period or a plurality of PWM periods and **in that** this at least one sum is used to calculate a common current value which is taken as a basis for the actual current control.

16. Use of the electronic controller according to at least one of Claims 1 to 13 in a motor vehicle brake system.

## Revendications

1. Régulateur électronique pour systèmes de régulation de véhicules automobiles, comportant au moins un circuit de commande de soupape qui régule au moyen d'une modulation d'impulsion en largeur le courant de charge (i_{L}) passant à travers une charge sensiblement inductive (L), et comportant au moins un circuit électronique de mesure de courant qui présente au moins un convertisseur analogique/numérique conçu pour convertir un signal de mesure analogique du courant de charge (i_{L}) en un signal de mesure numérique du courant de charge (i_{L}), dans lequel l'au moins un convertisseur analogique/numérique est un modulateur sigma-delta, **caractérisé en ce que** la sortie du modulateur sigma-delta est connectée à au moins un dispositif de calcul de valeur moyenne (8, 10, 11, 12).

2. Régulateur électronique selon la revendication 1, **caractérisé en ce que** l'au moins un modulateur sigma-delta du circuit électronique de mesure de courant effectue une mesure de courant du courant de charge (i_{L}) en suréchantillonnant le signal de mesure analogique du courant de charge (i_{L}), la fréquence d'horloge du modulateur sigma-delta étant notablement supérieure à la fréquence de la modulation d'impulsion en largeur.

3. Régulateur électronique selon la revendication 1 ou 2, **caractérisé en ce que** le circuit électronique de mesure de courant comporte au moins un FET (transistor à effet de champ) de détection (7) qui fournit directement ou indirectement le signal de mesure analogique du courant de charge (i_{L}).

4. Régulateur électronique selon la revendication 3, **caractérisé en ce que** la borne de grille de l'au moins un FET de détection (7) est reliée à la borne de grille d'au moins un circuit d'attaque de puissance (6) du trajet d'activation ou du trajet de remise en circulation et **en ce que** les bornes de drain et/ou les bornes de source du FET de détection (7) respectif et du circuit d'attaque de puissance (6) respectif sont directement ou indirectement reliées ou couplées les unes aux autres.

5. Régulateur électronique selon au moins l'une des revendications 1 à 4, **caractérisé en ce que** le modulateur sigma-delta est constitué d'un circuit de régulation qui comporte un élément intégrateur (2), un comparateur (3) et une source de courant (4) pouvant être commutée, notamment commandée.

6. Régulateur électronique selon au moins l'une des revendications 1 à 5, **caractérisé en ce que** le dispositif de calcul de valeur moyenne est un élément compteur (8, 10, 11, 12).

7. Régulateur électronique selon au moins l'une des revendications 1 à 6, **caractérisé en ce que** l'au moins un circuit électronique de mesure de courant de celui-ci comporte un trajet d'activation et un trajet de remise en circulation et **en ce que** chacun desdits trajets comporte au moins un modulateur sigma-delta.

8. Régulateur électronique selon la revendication 7, **caractérisé en ce que** le trajet d'activation et le trajet de remise en circulation comportent l'un et l'autre au moins un FET de détection (7), dans lequel lesdits FET de détection (7) sont respectivement directement ou indirectement reliés à un modulateur sigma-delta.

9. Régulateur électronique selon la revendication 7 ou 8, **caractérisé en ce que** le modulateur sigma-delta du trajet d'activation mesure un courant sensiblement uniquement pendant la phase d'activation et **en ce que** le modulateur sigma-delta du trajet de remise en circulation mesure un courant sensiblement uniquement pendant la phase de remise en circulation.

10. Régulateur électronique selon au moins l'une des revendications 7 à 9, **caractérisé en ce que** le signal de sortie du modulateur sigma-delta du trajet d'activation et le signal de sortie du modulateur sigma-delta du trajet de remise en circulation sont délivrés à un dispositif de calcul de valeur moyenne (12) commun qui traite les signaux de sortie des deux trajets.

11. Régulateur électronique selon la revendication 10, **caractérisé en ce que** l'au moins un circuit électronique de mesure de courant comporte au moins un moyen de commutation destiné à effectuer une commutation de canal (9), qui est conçu de manière à ce que la transmission de signal du signal de sortie du modulateur sigma-delta respectif des deux trajets PWM est effectuée vers le dispositif de calcul de valeur moyenne (12) commun en fonction de la phase PWM.

12. Régulateur électronique selon au moins l'une des revendications précédentes, **caractérisé en ce qu'**il est conçu de manière à évaluer à au moins certains instants définis, après une période PWM ou une pluralité de celles-ci, le contenu en données d'un ou plusieurs dispositifs de calcul de valeur moyenne (8, 10, 11, 12) et **en ce qu'**il calcule directement ou indirectement le courant de charge (i_{L}) à partir desdites données.

13. Régulateur électronique selon au moins l'une des revendications 7 à 12, **caractérisé en ce que** l'au moins un circuit électronique de mesure de courant de celui-ci est conçu de manière à ce que le signal de sortie du modulateur sigma-delta respectif des deux trajets PWM est en outre respectivement transmis à un dispositif de calcul de valeur moyenne (10, 11) supplémentaire.

14. Procédé de mesure de courant dans un régulateur électronique pour systèmes de régulation de véhicules automobiles, qui régule au moyen d'une modulation d'impulsion en largeur un courant de charge (i_{L}) passant à travers une charge sensiblement inductive (L) dans au moins un circuit de commande de soupape, dans lequel le procédé est mis en oeuvre notamment par un régulateur électronique selon au moins l'une des revendications 1 à 13, et dans lequel, conformément au procédé, sur au moins un trajet de signal d'un circuit électronique de mesure de courant, un signal de mesure analogique du courant de charge (i_{L}) est convertir en un signal de mesure numérique du courant de charge (i_{L}) au moyen d'un moins un convertisseur analogique/numérique, dans lequel la conversion analogique/numérique est effectuée par une modulation sigma-delta,
**caractérisé en ce que** la sortie du convertisseur est délivrée à un dispositif de calcul de valeur moyenne.

15. Procédé selon la revendication 14, **caractérisé en ce que** le signal de mesure numérique du courant de charge (i_{L}) d'un trajet d'activation et le signal de mesure numérique du courant de charge (i_{L}) d'un trajet de remise en circulation est/sont respectivement sommé(s) individuellement et/ou en commun au cours d'une période PWM ou d'une pluralité de périodes PWM et **en ce qu'**une valeur de courant commune servant de base à la régulation de courant proprement dite est calculée à partir de ladite au moins une somme.

16. Utilisation du régulateur électronique selon au moins l'une des revendications 1 à 13 dans un système de freinage de véhicule automobile.
